# EUROPEAN PATENT APPLICATION

(11) **EP 4 333 187 A1**
(43) Date of publication of application: **06.03.2024**
(21) Application number: 21938809.7
(22) Date of filing: 19.08.2021
(51) Int. Cl.: H01M 50/434, H01M 50/457

(54) **COMPOSITE SEPARATOR AND PREPARATION METHOD THEREFOR AND USE THEREOF**

(30) Priority: 28.04.2021 CN 202110470561
(71) Applicant: Eve Energy Co., Ltd., Huizhou, Guangdong 516006 (CN)
(72) Inventor: TAN, Xiaofang, Huizhou, Guangdong 516006 (CN); CHEN, Xingyu, Huizhou, Guangdong 516006 (CN); HE, Wei, Huizhou, Guangdong 516006 (CN); LIU, Jianhua, Huizhou, Guangdong 516006 (CN); LIU, Jincheng, Huizhou, Guangdong 516006 (CN)
(74) Representative: HGF
(86) International application number: PCT/CN2021/113488
(87) International publication number: WO 2022/227345

(57) **Abstract**

The present application relates to a composite separator and a preparation method therefor and use thereof. The composite separator comprises a base film and a composite coating coated on at least one side of the base film, wherein the composite coating comprises ceramics and polymers which are mutually dispersed. The ceramics and the polymers are mutually dispersed, such that the composite separator has good thermal stability, electrolyte wettability and good mechanical properties; and in addition, the hardness of a battery is improved, such that the safety performance of a lithium ion battery is significantly improved.

## Description

### TECHNICAL FIELD

The present application belongs to the technical field of lithium-ion batteries, and relates to a composite separator, a preparation method therefor and use thereof.

### BACKGROUND

With the advantages of high specific energy, no pollution, long service lifetime and no memory effect, lithium-ion batteries have become a research hotspot in recent years as the power source of new energy vehicles. The separator, as a key safety component of lithium-ion batteries, has a pore-rich structure, and its role is to block the contact between the positive and negative electrodes and provide a lithium ion transport channel.

At present, the commonly used separator is mainly polyethylene (PE), polypropylene (PP) and other polyolefin separator. The polyethylene (PE) and polypropylene (PP) separators have poor heat resistance because their melting point is generally lower than 200°C. Therefore, it has become the research focus about how to improve the heat resistance of the separator.

CN104701478A discloses a polyethylene microporous membrane including an organic/inorganic composite cross-linked coating for improving the use safety of lithium-ion batteries and a preparation method therefor. In this patent, aromatic heterocyclic polyester diol and aromatic isocyanate are used as basic components, combined with a cross-linking agent, a foaming agent, a catalyst and an inorganic nano-filler, and prepared into a coating solution according to a certain composition ratio; the coating solution is coated on at least one surface of the polyethylene microporous membrane and cured under a specific temperature condition, and then an organic polymer/inorganic nanoparticle composite cross-linked coating with pore-foam structure is formed on the surface of the polyethylene microporous membrane. However, there is no bonding between the separator and the positive and negative electrode sheets.

CN106654119A discloses a hybrid coated separator, a preparation method therefor and use thereof. The hybrid coated separator includes a matrix membrane, a ceramic particle coating and a polymer coating. The ceramic particle coating is formed on one or both sides of the matrix membrane, and the polymer coating is formed on the matrix membrane and/or on the ceramic particle coating. By forming both the ceramic particle coating and the polymer coating on the matrix membrane, the heat resistance of the separator and the bonding strength of the separator to the positive and negative electrode sheets are improved.

CN109994695A discloses a polymer slurry, a composite separator and a preparation method therefor. The polymer slurry includes, by weight, 10-30 parts of a polymer, 0.05-1.0 parts of a thickener, 5.1-26.5 parts of a wetting agent, 1.0-5.0 parts of a binder, 0.1-1.0 parts of a dispersant and 80-120 parts of water. The composite separator includes a matrix membrane, and a ceramic coating and a polymer dot coating which are coated on both sides of the matrix membrane, respectively, wherein the polymer dot coating is obtained by coating the above polymer slurry by high-pressure jetting.

Although the technical solutions in the above documents can improve the heat resistance of the separator, the introduction of polymer coating will increase the gas permeability value of the composite separator, and reduce the ionic conductivity, thereby increasing the internal resistance of lithium-ion batteries; and the coating process is complex, the production efficiency is low.

It can be found from the research in the prior art that it has become an urgent technical problem to be solved about how to improve the thermal stability of the separator, and meanwhile, improve the mechanical property, reduce the gas permeability value of the separator, improve the electrolyte wettability, enhance the lithium ion conductivity, and reduce the internal resistance of lithium-ion batteries.

### SUMMARY

The present application provides a composite separator, and a preparation method therefor and use thereof. The composite separator has good thermal stability and electrolyte wettability, excellent mechanical property, low gas permeability value and high lithium ion conductivity, which can effectively reduce the internal resistance of lithium-ion batteries and improve the safety performance and hardness of lithium-ion batteries at the same time.

To achieve this, the technical solutions below are used in the present application.

In a first aspect, the present application provides a composite separator, and the composite separator includes a porous matrix membrane and a composite coating coated on at least one side of the porous matrix membrane, in which the composite coating includes a ceramic and a polymer which are mutually dispersed.

In the present application, the ceramic has high temperature resistance, electrochemical stability, and better liquid absorption and retention capability, which can improve the heat resistance and oxidation resistance of the composite separator, guarantee the safety performance of the composite separator, and extend the lifetime of lithium-ion batteries; the polymer can enhance the bonding force between the composite separator and the electrode sheet, and meanwhile, improve the hardness of the battery; the ceramic and polymer are mutually dispersed to improve the heat resistance and mechanical property of the porous matrix membrane, improve the electrolyte wettability, and enhance the hardness of the battery at the same time, so that the safety performance of lithium-ion batteries can be greatly improved.

In the present application, the ceramic, polymer and matrix membrane act synergistically, reduce the gas permeability value of the composite separator, and meanwhile, improve the lithium ion conductivity, reduce the internal resistance of lithium-ion batteries, relieve the pore occluding in the polymer-coated separator caused by the polymer swelling, and enhance the long-term performance of batteries. The composite separator has a low pore closing temperature, high membrane breakage temperature and excellent thermal safety, and its performance is better than the porous matrix membrane and polymer-coated separator in the prior art, and it can be widely used in energy storage devices such as power ion batteries.

As an optional technical solution of the present application, the porous matrix membrane includes a polyolefin matrix membrane, optionally a polyethylene matrix membrane and/or a polypropylene matrix membrane.

Optionally, the porous matrix membrane has a thickness of 3-40 µm, such as 4 µm, 5 µm, 7 µm, 10 µm, 12 µm, 15 µm, 20 µm, 25 µm, 30 µm, 35 µm or 40 µm, optionally 4-20 µm.

Optionally, the porous matrix membrane has a pore size of 10-400 nm, such as 10 nm, 12 nm, 15 nm, 30 nm, 50 nm, 100 nm, 120 nm, 170 nm, 200 nm, 230 nm, 260 nm, 300 nm, 320 nm, 380 nm or 400 nm, optionally 20-100 nm.

Optionally, the porous matrix membrane has a porosity of 30-60%, such as 30%, 35%, 40%, 45%, 50% or 55%.

As an optional technical solution of the present application, the composite coating has a thickness of 0.5-10 µm, such as 0.5 µm, 1 µm, 1.5 µm, 2 µm, 2.5 µm, 3 µm, 3.5 µm, 4 µm, 5 µm, 6 µm, 7 µm, 8 µm, 9 µm or 10 µm, optionally 1-3 µm.

In the present application, the thickness of the composite coating is limited to 0.5-5 µm to guarantee the gas permeability and bonding force of the composite separator.

Optionally, the ceramic includes any one or a combination of at least two of boehmite, alumina, magnesium hydroxide, magnesium oxide, barium titanate, zinc oxide or barium sulfate, optionally boehmite or alumina.

Optionally, the ceramic has a specific surface area of 1-12 m²/g, such as 2 m²/g, 4 m²/g, 6 m²/g, 8 m²/g, 10 m²/g or 12 m²/g, optionally 4-8 m²/g.

In the present application, ceramic particles with smaller particle size can meet the requirements of thinner coating, give more uniform coating and have higher specific surface area, which allows the coated separator to possess good wetting performance and liquid retention ratio for the electrolyte liquid, and effectively improves the capacity retention rate of lithium-ion batteries. The particle size of ceramic particles can be selected according to the coating thickness requirements.

Optionally, the ceramic has a particle size of 0.1-4 µm, such as 0.5 µm, 1 µm, 1.5 µm, 2 µm, 2.5 µm, 3 µm, 3.5 µm or 4 µm, optionally 0.3-3 µm.

Optionally, based on a total mass of the ceramic and the polymer being 100%, the ceramic has a mass percentage of 5-98%, such as 5%, 10%, 20%, 30%, 40%, 50%, 60%, 70%, 80%, 90% or 95%, optionally 80-98%.

Optionally, the polymer includes any one or a combination of at least two of a vinylidene fluoride-hexafluoropropylene copolymer, a vinylidene fluoride-octafluoroisobutylene copolymer, a vinylidene fluoride-tetrafluoroethylene copolymer, polymethyl methacrylate or polystyrene acrylate, in which a typical but not limiting combination includes a combination of a vinylidene fluoride-hexafluoropropylene copolymer and a vinylidene fluoride-tetrafluoroethylene copolymer, a combination of a vinylidene fluoride-octafluoroisobutylene copolymer and polymethyl methacrylate, or polystyrene acrylate; the polymer is optionally selected from any one or a combination of at least two of a vinylidene fluoride-hexafluoropropylene copolymer, polymethyl methacrylate or polystyrene acrylate.

Optionally, the polymer has a molecular mass of 300000-2000000, such as 400000, 500000, 600000, 800000, 1000000, 1200000, 1400000, 1600000, 1800000 or 2000000, optionally 400000-1500000.

Optionally, the polymer has a particle size of 0.1-10 µm, such as 0.2 µm, 0.5 µm, 1 µm, 3 µm, 5 µm, 8 µm or 10 µm, optionally 0.15-7 µm.

Optionally, the polymer has a glass transition temperature of -60-30°C, such as -60°C, -40°C, -20°C, -10°C, 0°C, 10°C, 20°C or 30°C, optionally -50-15°C.

Optionally, based on a total mass of the ceramic and the polymer being 100%, the polymer has a mass percentage of 2-95%, such as 3%, 5%, 10%, 20%, 30%, 40%, 50%, 60%, 70%, 80% or 90%, optionally 2-20%.

As an optional technical solution of the present application, one side of the porous matrix membrane is coated with the composite coating, and the other side is coated with a ceramic coating.

In the present application, the ceramic coating and the composite coating act synergistically to further improve the thermal stability and mechanical property of the composite separator, reduce the gas permeability value, and improve the electrolyte wettability and lithium ion conductivity.

In the present application, the ceramic of the ceramic coating and the ceramic of the composite coating can be the same or different, as long as they can act synergistically to improve the thermal stability and mechanical property of the composite separator, reduce the gas permeability value, and improve the electrolyte wettability and lithium ion conductivity.

Optionally, the ceramic coating has a thickness of 0.5-5 µm, such as 0.5 µm, 0.8 µm, 1 µm, 1.5 µm, 2 µm, 2.5 µm, 3 µm, 3.5 µm, 4 µm, 4.5 µm, 4.8 µm or 5 µm, optionally 1-3 µm.

In the present application, the thickness of the ceramic coating is limited to 0.5-5 µm to guarantee a good thermal shrinkage performance and improve the heat resistance and oxidation resistance of the composite separator.

In the present application, optionally, the composite coating has a thickness of 0.5-10 µm.

Optionally, the composite coating has a thickness of 1-5 µm.

Optionally, the polymer has a molecular mass of 400000-1800000.

Optionally, the polymer has a glass transition temperature of -60-100°C, such as -60°C, -40°C, -20°C, -10°C, 0°C, 20°C, 40°C, 60°C, 80°C or 100°C, optionally -50-80°C.

In a second aspect, the present application provides a method for preparing the composite separator according to the first aspect, which includes the following steps:
(1) mixing a ceramic, a polymer and a solvent to obtain a mixed slurry;
(2) coating the mixed slurry obtained from step (1) on at least one side of the porous matrix membrane to obtain the composite separator.

By dispersing the ceramic and the polymer mutually, the preparation method provided by the present application improves the thermal stability and mechanical property of the porous matrix membrane, reduces the gas permeability value, improves the electrolyte wettability and lithium ion conductivity, reduces the internal resistance of lithium-ion batteries, and improves the hardness and safety performance of batteries. The method has a simple process and high production efficiency.

As an optional technical solution of the present application, the ceramic of step (1) includes any one or a combination of at least two of boehmite, alumina, magnesium hydroxide, magnesium oxide, barium titanate, zinc oxide or barium sulfate, optionally boehmite or alumina.

Optionally, the ceramic of step (1) has a specific surface area of 1-12 m²/g, such as 2 m²/g, 4 m²/g, 6 m²/g, 8 m²/g, 10 m²/g or 12 m²/g, optionally 4-8 m²/g.

Optionally, the ceramic of step (1) has a particle size of 0.1-4 µm, such as 0.5 µm, 1 µm, 1.5 µm, 2 µm, 2.5 µm, 3 µm, 3.5 µm or 4 µm, optionally 0.3-3 µm.

Optionally, in step (1), based on a total mass of the ceramic and the polymer being 100%, the ceramic has a mass percentage of 5-98%, such as 5%, 10%, 20%, 30%, 40%, 50%, 60%, 70%, 80%, 90% or 95%, optionally 80-98%.

Optionally, the polymer of step (1) includes any one or a combination of at least two of a vinylidene fluoride-hexafluoropropylene copolymer, a vinylidene fluoride-octafluoroisobutylene copolymer, a vinylidene fluoride-tetrafluoroethylene copolymer, polymethyl methacrylate or polystyrene acrylate, and optionally, any one or a combination of at least two of a vinylidene fluoride-hexafluoropropylene copolymer, polymethyl methacrylate or polystyrene acrylate.

Optionally, the polymer of step (1) has a molecular mass of 300000-2000000, such as 400000, 500000, 600000, 800000, 1000000, 1200000, 1400000, 1600000, 1800000 or 2000000, optionally 400000-1500000.

Optionally, the polymer of step (1) has a particle size of 0.1-10 µm, such as 0.2 µm, 0.5 µm, 1 µm, 3 µm, 5 µm, 8 µm or 10 µm, optionally 0.15-7 µm.

Optionally, the polymer of step (1) has a glass transition temperature of -60-30°C, such as -60°C, -40°C, -20°C, -10°C, 0°C, 10°C, 20°C or 30°C, optionally -50-15°C.

Optionally, in step (1), based on a total mass of the ceramic and the polymer being 100%, the polymer has a mass percentage of 2-95%, such as 3%, 5%, 10%, 20%, 30%, 40%, 50%, 60%, 70%, 80% or 90%, optionally 2-20%.

Optionally, the solvent of step (1) includes any one or a combination of at least two of water, acetone, dichloromethane, cyclohexane or N-methylpyrrolidone, optionally water or dichloromethane.

As an optional technical solution of the present application, the mixing of step (1) includes the following steps:
performing a primary mixing on the polymer and the solvent, adding the ceramic, and performing a secondary mixing to obtain the mixed slurry.

In the present application, the mixing method can disperse the polymer into the slurry uniformly.

Optionally, means of the primary mixing and the secondary mixing independently include stirring and/or ultrasonics.

Optionally, the mixed slurry of step (1) has a viscosity of 0-80 CP, such as 10 CP, 20 CP, 30 CP, 40 CP, 50 CP, 60 CP, 70 CP or 80 CP, optionally 30-50 CP.

Optionally, the mixed slurry of step (1) has a solid content of 20-70%, such as 20%, 30%, 40%, 50%, 60% or 70%, optionally 30-50%.

As an optional technical solution of the present application, the porous matrix membrane of step (2) includes a polyolefin matrix membrane, optionally a polyethylene matrix membrane and/or a polypropylene matrix membrane.

Optionally, the porous matrix membrane of step (2) has a thickness of 3-40 µm, such as 4 µm, 5 µm, 7 µm, 10 µm, 12 µm, 15 µm, 20 µm, 25 µm, 30 µm, 35 µm or 40 µm, optionally 4-20 µm.

Optionally, the porous matrix membrane of step (2) has a pore size of 10-400 nm, such as 10 nm, 12 nm, 15 nm, 30 nm, 50 nm, 100 nm, 120 nm, 170 nm, 200 nm, 230 nm, 260 nm, 300 nm, 320 nm, 380 nm or 400 nm, optionally 20-100 nm.

Optionally, the porous matrix membrane of step (2) has a porosity of 30-60%, such as 30%, 35%, 40%, 45%, 50% or 55%.

Optionally, a mode of the coating of step (2) includes any one or a combination of at least two of spread coating, roller coating, spraying or dip coating, optionally roller coating and/or spread coating.

Optionally, the coating of step (2) has a thickness of 0.5-5 µm, such as 0.5 µm, 1 µm, 1.5 µm, 2 µm, 2.5 µm, 3 µm, 3.5 µm, 4 µm, 4.5 µm or 5 µm, optionally 1-3 µm.

As an optional technical solution of the present application, step (2) further includes: drying the mixed slurry after coating the mixed slurry on at least one side of the porous matrix membrane.

Optionally, in step (2), one side of the porous matrix membrane is coated with the mixed slurry, and the other side of the porous matrix membrane is coated with a ceramic slurry.

In the present application, the mixed slurry and the ceramic slurry can be coated on the porous matrix membrane surface in one step or in separated steps. All the coating modes commonly used by those skilled in the art are applicable to the present application. The coating is optionally carried on in one step, which can improve production efficiency.

In the present application, there is no specific limitation on the preparation method for the ceramic slurry. The binder can be mixed with the solvent first and then mixed with the ceramic, or the ceramic can be added directly to a binder solution and mixed.

Optionally, a method for preparing the ceramic slurry includes the following steps:
adding a ceramic to a binder solution and mixing them to obtain the ceramic slurry.

Optionally, the ceramic slurry is coated with a thickness of 0.5-5 µm, such as 0.5 µm, 0.8 µm, 1 µm, 1.5 µm, 2 µm, 2.5 µm, 3 µm, 3.5 µm, 4 µm, 4.5 µm, 4.8 µm or 5 µm, optionally 1-3 µm.

As an example, the present application provides a method for preparing a composite separator, and the preparation method specifically includes the steps below.
(1) A binder is mixed with a solvent, then added with a ceramic and mixed to obtain a ceramic slurry; wherein, the binder optionally includes any one or a combination of at least two of polyvinylidene fluoride, sodium carboxymethylcellulose, polyacrylic acid, polyvinyl alcohol or styrene-butadiene rubber; the ceramic includes any one or a combination of at least two of boehmite, alumina, magnesium hydroxide, magnesium oxide, barium titanate, zinc oxide or barium sulfate; based on a total mass of the ceramic and the binder being 100%, the binder has a mass percentage of 2-8%, and the ceramic has a mass percentage of 92-98%.
(2) A polymer is mixed with a solvent, then added with a ceramic and mixed to obtain a mixed slurry with a viscosity of 0-80 CP and a solid content of 20-70%, in which the ceramic has a particle size of 0.1-4 µm and a specific surface area of 1-12 m²/g; the polymer includes any one or a combination of at least two of a vinylidene fluoride-hexafluoropropylene copolymer, a vinylidene fluoride-octafluoroisobutylene copolymer, a vinylidene fluoride-tetrafluoroethylene copolymer, polymethyl methacrylate or polystyrene acrylate; the solvent includes any one or a combination of at least two of water, acetone, dichloromethane, cyclohexane or N-methylpyrrolidone; the ceramic includes any one or a combination of at least two of boehmite, alumina, magnesium hydroxide, magnesium oxide, barium titanate, zinc oxide or barium sulfate; based on a total mass of the ceramic and the polymer being 100%, the ceramic has a mass percentage of 5-98%, and the polymer has a mass percentage of 2-95%.
(3) The mixed slurry obtained from step (2) is coated on one side or both sides of the porous matrix membrane, the ceramic slurry obtained from step (1) is coated on one side of the porous matrix membrane, and the slurries are dried to obtain the composite separator.

Optionally, the polymer of step (1) has a molecular mass of 400000-1800000.

Optionally, the polymer of step (1) has a glass transition temperature of -60-100°C, such as -60°C, -40°C, -20°C, -10°C, 0°C, 20°C, 30°C, 40°C, 60°C, 80°C or 100°C, optionally -50-80°C.

Optionally, the coating of step (2) has a thickness of 0.5-10 µm, such as 0.5 µm, 0.8 µm, 1 µm, 1.5 µm, 2 µm, 2.5 µm, 3 µm, 3.5 µm, 4 µm, 4.5 µm, 4.8 µm, 5 µm, 7 µm or 10 µm.

Optionally, the coating of step (2) has a thickness of 1-5 µm.

In a third aspect, the present application provides a lithium-ion battery, which includes the composite separator according to the first aspect.

In the present application, the lithium-ion battery which adopts the composite separator according to the first aspect has a low internal resistance, excellent safety performance and hardness.

Compared with the prior art, the present application has at least the following beneficial effects.
(1) The composite separator of the present application has good thermal stability and electrolyte wettability, excellent mechanical property, low gas permeability value and high lithium ion conductivity, which can effectively reduce the internal resistance of lithium-ion batteries and improve the safety performance and hardness of lithium-ion batteries at the same time.
(2) In the present application, the thermal stability, electrolyte wettability and lithium ion conductivity of the composite separator are further improved by controlling the mass percentages of ceramic and polymer in the mixed slurry, the thickness of the composite coating, and the thickness difference between the composite coating and the ceramic coating.
(3) The preparation method provided in the present application has a simple process and high production efficiency.

### BRIEF DESCRIPTION OF DRAWINGS

FIG. 1 is a schematic structure diagram of a composite separator provided by an embodiment of the present application.
FIG. 2 is a schematic structure diagram of a composite separator provided by an embodiment of the present application.
FIG. 3 is a schematic structure diagram of a composite separator provided by an embodiment of the present application.
FIG. 4 is an SEM image of a composite coating provided by an embodiment of the present application.

In the figures, 1-porous matrix membrane, 2-ceramic coating, 3-composite coating, 4-ceramic, 5-polymer.

### DETAILED DESCRIPTION

The technical solutions of the present application are further described below in connection with specific embodiments. It should be apparent to those skilled in the art that the embodiments are merely used for a better understanding for the present application and should not be regard as a specific limitation of the present application.

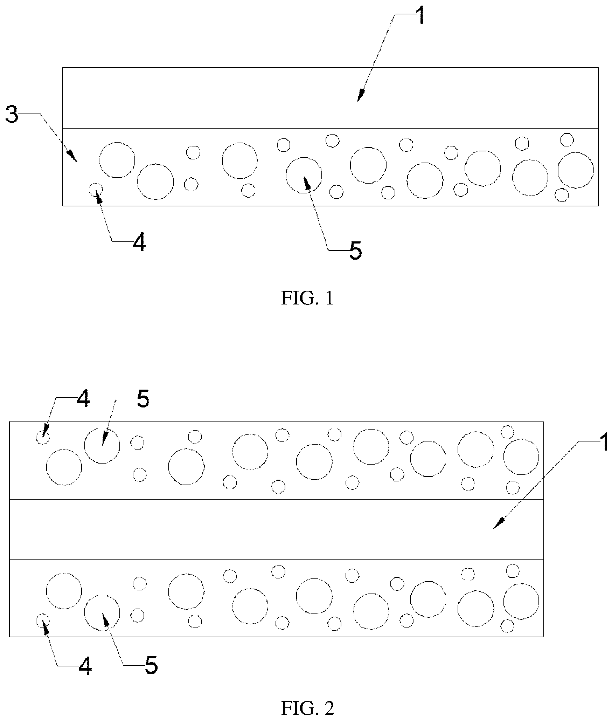

Embodiments of the present application provide composite separators, schematic structure diagrams of which are shown in FIG. 1, FIG. 2 and FIG. 3. The composite separator includes a porous matrix membrane 1, a ceramic coating 2 coated on one side of the porous matrix membrane 1 and a composite coating 3 coated on the other side of the porous matrix membrane 1, and the composite coating 3 includes a ceramic 4 and a polymer 5.

### Example 1

This example provides a method for preparing a composite separator, which includes the following steps below:
(1) alumina and polystyrene acrylate were added to water, in which the alumina had a specific surface area of 6 m²/g and a particle size of 1.5 µm, and the polystyrene acrylate had a molecular mass of 1500000, a glass transition temperature of 5°C and a particle size of 3-10 µm, and the mixture were stirred until polystyrene acrylate dissolved to obtain a mixed slurry with a viscosity of 55 CP and a solid content of 45%;
   based on a total mass of the alumina and the polystyrene acrylate copolymer being 100%, the alumina had a mass percentage of 93% and the polystyrene acrylate had a mass percentage of 7%;
(2) the mixed slurry obtained from step (1) was coated on one side of a polyethylene matrix membrane, and dried to obtain the composite separator, wherein the polyethylene matrix membrane had a thickness of 9 µm and a porosity of 40%.

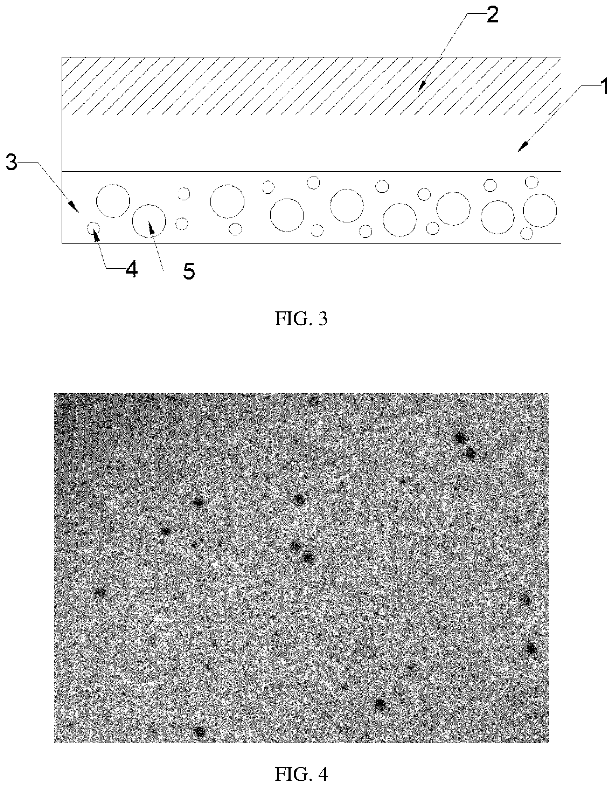

The composite separator prepared in this example is shown in FIG. 1, the composite coating had a thickness of 3 µm, and an SEM image of the composite coating is shown in FIG. 4.

### Example 2

This example provides a method for preparing a composite separator, which includes the following steps:
(1) alumina and polystyrene acrylate were added to water, in which the alumina had a specific surface area of 8 m²/g and a particle size of 0.2 µm, and the polystyrene acrylate had a molecular mass of 1000000, a glass transition temperature of 10°C and a particle size of 3-10 µm, and the mixture were stirred until polystyrene acrylate dissolved to obtain a mixed slurry with a viscosity of 50 CP and a solid content of 30%;
   based on a total mass of the alumina and the polystyrene acrylate copolymer being 100%, the alumina had a mass percentage of 95% and the polystyrene acrylate had a mass percentage of 5%;
(2) the mixed slurry obtained from step (1) was coated on two sides of a polyethylene matrix membrane, and dried to obtain the composite separator, wherein the polyethylene matrix membrane had a thickness of 9 µm and a porosity of 45%.

The composite separator prepared in this example is shown in FIG. 2, the composite coating had a thickness of 2 µm.

### Example 3

This example provides a method for preparing a composite separator, which includes the following steps:
(1) polystyrene acrylate was added to water, which had a molecular mass of 2000000, a glass transition temperature of -10°C and a particle size of 3-10 µm, the mixture were stirred until polystyrene acrylate dissolved, and boehmite was added, which had a specific surface area of 9 m²/g and a particle size of 1 µm, and stirred uniformly to obtain a mixed slurry with a viscosity of 60 CP and a solid content of 50%;
   based on a total mass of the boehmite and the polystyrene acrylate copolymer being 100%, the boehmite had a mass percentage of 97% and the polystyrene acrylate had a mass percentage of 3%;
(2) polyvinylidene fluoride was added to water and stirred until being dissolved, boehmite was added, which had a specific surface area of 6 m²/g and a particle size of 2 µm, and stirred uniformly to obtain a ceramic slurry with a viscosity of 65 CP and a solid content of 50%;
   based on a total mass of the boehmite and the polyvinylidene fluoride being 100%, the boehmite had a mass percentage of 95% and the polyvinylidene fluoride had a mass percentage of 5%;
(3) the mixed slurry obtained from step (1) was roller-coated on one side of a polyethylene matrix membrane, the ceramic slurry obtained from step (2) was roller-coated on the other side of the polyethylene matrix membrane, in which the polyethylene matrix membrane had a thickness of 9 µm and a porosity of 43%, and the slurries were dried to obtain the composite separator.

The composite separator prepared in this example is shown in FIG. 3, the composite coating had a thickness of 2 µm, and the ceramic coating had a thickness of 2 µm.

### Example 4

This example differs from Example 1 only in that the alumina in step (1) was replaced with boehmite.

The composite separator prepared in this example had a porosity of 38%, and the composite coating had a thickness of 3 µm.

### Example 5

This example differs from Example 2 only in that the thickness of the polyethylene matrix membrane was replaced with 12 µm and the porosity was replaced with 48%.

In the composite separator prepared in this example, the composite coating had a thickness of 3 µm.

### Comparative Example 1

This comparative example differs from Example 3 only in that the composite coating was replaced with a ceramic coating.

### Comparative Example 2

This comparative example differs from Example 4 in that a vinylidene fluoride-hexafluoropropylene copolymer was roller-coated on one side of the matrix membrane in Example 4, in which the vinylidene fluoride-hexafluoropropylene copolymer had a molecular mass of 400000 and a particle size of 200 nm.

The composite separator prepared in this comparative example includes the matrix membrane and the polymer layer coated on one side of the matrix membrane, and the polymer coating had a thickness of 1 µm.

### Performance evaluation of the composite separators

The composite separators provided by various examples and comparative examples were tested for thermal stability, liquid absorption ratio, gas permeability value and ionic conductivity. In addition, the composite separator was assembled with a positive electrode sheet and a negative electrode sheet into a bare cell and then subjected to hot pressing. The bare cell after hot pressing was placed on a shelf with fixed height, held for 24 h and then tested for deformation. The lithium nickel cobalt manganese oxide, acetylene black and polyvinylidene fluoride in the positive electrode sheet had a mass ratio of 9.5:0.2:0.3. The graphite, acetylene black, sodium carboxymethyl cellulose and styrene-butadiene rubber in the negative electrode sheet had a mass ratio of 9.5:0.2:0.15:0.15. The electrolyte liquid was injected, which was LiPF₆/EC+DEC+DMC (EC, DEC and DMC had a volume ratio of 1:1:1). A lithium-ion battery was prepared and then tested for internal resistance, the test method of which is as follows.

Thermal stability test: five samples should be prepared, a square sample of 120 mm×120 mm was cut out along the longitudinal direction of the membrane roll, and a distance of 100 mm×100 mm was marked on the sample. The sample was clamped by glass plates and baked in a constant temperature oven at 130°C for 1 h. After baking, the lengths along MD and TD directions were measured, and the shrinkage ratio was calculated.

Size of the glass plate: 220 mm×220 mm×4 mm; material of the glass plate: reinforced glass.

Thermal shrinkage ratio X was calculated according to the following equation: (initial size - after baking size)/initial size

Separator liquid absorption ratio test: the coated membrane of 10×10 cm was weighed, and the mass was represented as W₀. The coated membrane was immersed in a mixture solution of ethylene carbonate (EC):propylene carbonate (PC) = 1: 1 at room temperature and stood for 2h, then the electrolyte liquid on the coated membrane surface was removed by filter paper, and then the coated membrane was weighed, and the mass was represented as W₁. After standing for 10 min at room temperature, the coated membrane was weighed again, and the mass was represented as W₂. The liquid absorption ratio = (W₂-W₀)/W₀.

Gas permeability value test: with reference to GB/T 458-2008, five samples were tested by a gas permeability tester, and an average value of the measured results was the gas permeability value.
Ionic conductivity test: inert stainless steel electrodes were used to prepare a symmetric cell for the test. The cell resistance was increased with the separator number increasing, there was alinear relationship, and the corresponding slope was the separator resistance. Separator ionic conductivity calculation equation: σS = d/(RS×A×10); wherein,
σS is the separator ionic conductivity, in mS/cm;
d is the thickness of the separator, in µm; measured by a thickness gauge;
RS is the separator resistance, in Ω;
A is the effective area of the separator in the symmetrical cell and takes the value of 6 cm²;
note: The "10" in denominator is the scale conversion ratio.
Battery internal resistance test: a battery internal resistance tester was used for the test.

Test results are shown in Table 1.

**Table 1**

| Samples | Deformation (%) | Thermal Stability (MD, %) | Liquid Absorption Ratio (%) | Gas Permeability (s/100cc) | Ionic Resistivity (mS/cm) | Battery Internal Resistance (mΩ) |
|---|---|---|---|---|---|---|
| Example 1 | 0 | 1.1 | 47 | 185 | 1.03 | 18.2 |
| Example 2 | 0 | 1.1 | 52 | 200 | 1.09 | 18.7 |
| Example 3 | 0 | 1.2 | 48 | 105 | 0.90 | 16.9 |
| Example 4 | 0 | 1.1 | 47 | 180 | 1.02 | 18.1 |
| Example 5 | 0 | 1.6 | 55 | 110 | 0.91 | 17.0 |
| Comparative Example 1 | 3.5 | 2.0 | 45 | 210 | 1.07 | 18.9 |
| Comparative Example 2 | 0 | 1.5 | 50 | 296 | 1.15 | 21.5 |

The following points can be seen from Table 1.

In terms of comparison between Example 3 and Comparative Example 1, the matrix membrane of Example 3 is coated with the composite coating and the ceramic coating on two sides respectively, while the matrix membrane of Comparative Example 1 is coated with the ceramic coating on both sides. The thermal stability of Example 3 is better than Comparative Example 1, and the gas permeability, ionic resistivity and battery internal resistance of Example 3 are lower than Comparative Example 1, the reason of which is that the ceramic coating and the composite coating act synergistically to further improve the thermal stability and mechanical property of the composite separator, reduce the gas permeability, and improve the electrolyte wettability and lithium ion conductivity.

In terms of comparison between Example 4 and Comparative Example 2, the matrix membrane of Example 4 is coated with the composite coating composed of the polymer and the ceramic on the surface, while the matrix membrane of Comparative Example 2 is coated with the polymer coating singly on the surface. It is seen from the test data that the thermal stability of Example 4 is better than Comparative Example 2, and the liquid absorption ratio, gas permeability, ionic resistivity and battery internal resistance of Example 4 are lower than Comparative Example 2, the reason of which is that by combining the ceramic and the polymer together and dispersing mutually, the thermal stability of the matrix membrane, the electrolyte wettability and the hardness of the battery can be improved at the same time, so that the safety performance of lithium-ion batteries can be greatly improved. The ceramic, polymer and matrix membrane act synergistically, reduce the gas permeability value of the composite separator, and meanwhile, improve the lithium ion conductivity and reduce the internal resistance of lithium-ion batteries.

The applicant has stated that although the detailed structural features of the present application are illustrated by the embodiments in the present application, the present application is not limited to the detailed structural features, which means that the present application is not necessarily rely on the detailed structural features for implementation.

## Claims

1. A composite separator, comprising a porous matrix membrane and a composite coating coated on at least one side of the porous matrix membrane, wherein the composite coating comprises a ceramic and a polymer which are mutually dispersed.

2. The composite separator according to claim 1, wherein the porous matrix membrane is coated with the composite coating on one side and a ceramic coating on the other side.

3. The composite separator according to claim 2, wherein the ceramic coating has a thickness of 0.5-5 µm.

4. The composite separator according to claim 3, wherein the ceramic coating has a thickness of 1-3 µm.

5. The composite separator according to any one of claims 1 to 4, wherein the porous matrix membrane comprises a polyolefin matrix membrane, optionally a polyethylene matrix membrane and/or a polypropylene matrix membrane;
optionally, the porous matrix membrane has a thickness of 3-40 µm, optionally 4-20 µm;
optionally, the porous matrix membrane has a pore size of 10-400 nm, optionally 20-100 nm;
optionally, the porous matrix membrane has a porosity of 30-60%.

6. The composite separator according to any one of claims 1 to 5, wherein the ceramic comprises any one or a combination of at least two of boehmite, alumina, magnesium hydroxide, magnesium oxide, barium titanate, zinc oxide or barium sulfate, optionally boehmite or alumina;
optionally, the ceramic has a specific surface area of 1-12 m²/g, optionally 4-8 m²/g;
optionally, the ceramic has a particle size of 0.1-4 µm, optionally 0.3-3 µm;
optionally, based on a total mass of the ceramic and the polymer being 100%, the ceramic has a mass percentage of 5-98%, optionally 80-98%;
optionally, the polymer comprises any one or a combination of at least two of a vinylidene fluoride-hexafluoropropylene copolymer, a vinylidene fluoride-octafluoroisobutylene copolymer, a vinylidene fluoride-tetrafluoroethylene copolymer, polymethyl methacrylate or polystyrene acrylate, optionally a vinylidene fluoride-hexafluoropropylene copolymer, polymethyl methacrylate or polystyrene acrylate;
optionally, based on a total mass of the ceramic and the polymer being 100%, the polymer has a mass percentage of 2-95%, optionally 2-20%.

7. The composite separator according to any one of claims 1 to 6, wherein the polymer has a molecular mass of 300000-2000000, optionally 400000-1500000;
optionally, the polymer has a particle size of 0.1-10 µm, optionally 0.15-7 µm;
optionally, the polymer has a glass transition temperature of -60-30°C, optionally -50-15°C.

8. The composite separator according to any one of claims 1 to 7, wherein the composite coating has a thickness of 0.5-5 µm, optionally 1-3 µm.

9. The composite separator according to any one of claims 1 to 7, wherein the composite coating has a thickness of 0.5-10 µm.

10. The composite separator according to any one of claims 1 to 7, wherein the composite coating has a thickness of 1-5 µm.

11. The composite separator according to any one of claims 1 to 6, wherein the polymer has a molecular mass of 400000-1800000.

12. The composite separator according to any one of claims 1 to 6, wherein the polymer has a glass transition temperature of -60-100°C, optionally -50-80°C.

13. A method for preparing the composite separator according to any one of claims 1 to 8, comprising the following steps:
(1) mixing a ceramic, a polymer and a solvent to obtain a mixed slurry;
(2) coating the mixed slurry obtained from step (1) on at least one side of the porous matrix membrane to obtain the composite separator.

14. The method according to claim 13, wherein the ceramic of step (1) comprises any one or a combination of at least two of boehmite, alumina, magnesium hydroxide, magnesium oxide, barium titanate, zinc oxide or barium sulfate, optionally boehmite or alumina;
optionally, the ceramic of step (1) has a specific surface area of 1-12 m²/g, optionally 4-8 m²/g;
optionally, the ceramic of step (1) has a particle size of 0.1-4 µm, optionally 0.3-3 µm;
optionally, in step (1), based on a total mass of the ceramic and the polymer being 100%, the ceramic has a mass percentage of 5-98%, optionally 80-98%;
optionally, the polymer of step (1) comprises any one or a combination of at least two of a vinylidene fluoride-hexafluoropropylene copolymer, a vinylidene fluoride-octafluoroisobutylene copolymer, a vinylidene fluoride-tetrafluoroethylene copolymer, polymethyl methacrylate or polystyrene acrylate, and optionally, any one or a combination of at least two of a vinylidene fluoride-hexafluoropropylene copolymer, polymethyl methacrylate or polystyrene acrylate;
optionally, in step (1), based on a total mass of the ceramic and the polymer being 100%, the polymer has a mass percentage of 2-95%, optionally 2-20%;
optionally, the solvent of step (1) comprises any one or a combination of at least two of water, acetone, dichloromethane, cyclohexane or N-methylpyrrolidone, optionally water or dichloromethane.

15. The method according to claim 13 or 14, wherein the mixing of step (1) comprises the following steps:
performing a primary mixing on the polymer and the solvent, adding the ceramic, and performing a secondary mixing to obtain the mixed slurry;
optionally, means of the primary mixing and the secondary mixing independently comprise stirring and/or ultrasonics;
optionally, the mixed slurry of step (1) has a viscosity of 0-80 CP, optionally 30-50 CP;
optionally, the mixed slurry of step (1) has a solid content of 20-70%, optionally 30-50%.

16. The method according to any one of claims 13 to 15, wherein the porous matrix membrane of step (2) comprises a polyolefin matrix membrane, optionally a polyethylene matrix membrane and/or a polypropylene matrix membrane;
optionally, the porous matrix membrane of step (2) has a thickness of 3-40 µm, optionally 4-20 µm;
optionally, the porous matrix membrane of step (2) has a pore size of 10-400 nm, optionally 20-100 nm;
optionally, the porous matrix membrane of step (2) has a porosity of 30-60%;
optionally, a mode of the coating of step (2) comprises any one or a combination of at least two of spread coating, roller coating, spraying or dip coating, optionally roller coating and/or spread coating.

17. The method according to any one of claims 13 to 16, wherein step (2) further comprises drying the mixed slurry after coating the mixed slurry on at least one side of the porous matrix membrane;
optionally, in step (2), one side of the porous matrix membrane is coated with the mixed slurry, and the other side of the porous matrix membrane is coated with a ceramic slurry;
optionally, a method for preparing the ceramic slurry comprises the following steps:
adding a ceramic to a binder solution and mixing them to obtain the ceramic slurry; optionally, the ceramic slurry is coated with a thickness of 0.5-5 µm, optionally 1-3 µm.

18. The method according to any one of claims 13 to 17, wherein the coating of step (2) has a thickness of 0.5-5 µm, optionally 1-3 µm.

19. The method according to any one of claims 13 to 18, wherein the polymer of step (1) has a molecular mass of 300000-2000000, optionally 400000-1500000;
optionally, the polymer of step (1) has a particle size of 0.1-10 µm, optionally 0.15-7 µm;
optionally, the polymer of step (1) has a glass transition temperature of -60-30°C, optionally -50-15°C.

20. The method according to any one of claims 13 to 17, wherein the coating of step (2) has a thickness of 0.5-10 µm.

21. The method according to any one of claims 13 to 17, wherein the coating of step (2) has a thickness of 1-5 µm.

22. The method according to any one of claims 13 to 18, wherein the polymer of step (1) has a molecular mass of 400000-1800000.

23. The method according to any one of claims 13 to 18, wherein the polymer of step (1) has a glass transition temperature of -60-100°C, optionally -50-80°C.

24. A lithium-ion battery, comprising the composite separator according to any one of claims 1 to 8.

25. A lithium-ion battery, comprising the composite separator according to any one of claims 9 to 12.
